# EUROPEAN PATENT APPLICATION

(11) **EP 3 040 950 A2**
(43) Date of publication of application: **06.07.2016**
(21) Application number: 15180528.0
(22) Date of filing: 11.08.2015
(51) Int. Cl.: G07C 9/00

(54) **BATTERY-FREE SMART KEY AND INTELLIGENT ENTRANCE GUARD UNLOCKING SYSTEM AND UNLOCKING METHOD THEREOF USING SAME**

(30) Priority: 31.12.2014 TW 103146683
(71) Applicant: Hon Hai Precision Industry Co., Ltd., New Taipei City (TW)
(72) Inventor: LIN, Shiang-Hua, New Taipei City (TW); LIAO, Kuang-Yao, New Taipei City (TW); LEE, Ping-Mao, New Taipei City (TW)
(74) Representative: Huang, Chongguang

(57) **Abstract**

An intelligent entrance guard unlocking method includes: transmitting electric energy of an intelligent entrance guard by wireless electromagnetic radiation via a transmit coil; receiving the electric energy via a receive coil of a battery-free smart key; controlling a infrared transmit unit of the battery-free smart key to transmit an infrared signal containing an identification code of the battery-free smart key to the intelligent entrance guard; obtaining a predefined identification code from a first storage unit of the intelligent entrance guard and comparing the identification code with the predefined identification code; unlocking the intelligent entrance guard when the identification code matches with the predefined identification code and not unlocking the intelligent entrance guard when the identification code does not match with the predefined identification code.

## Description

### BACKGROUND

### FIELD

The subject matter herein generally relates to battery-free smart keys and intelligent entrance guard unlocking systems and intelligent entrance guard unlocking methods using same.

### BACKGROUND

In order to control entrance to a room or a device, a security system or admittance system can be implemented. Traditional systems have included a physical key. A physical key requires the operator to maintain possession of the physical key for both entrance and preventing others from entrance. Other systems involve electronic devices that communicate via wired or wireless technology. These systems can include batteries to operate.

### SUMMARY

According to one aspect of the disclosure, an intelligent entrance guard unlocking system includes a power unit of an intelligent entrance guard, a current transmitter of the intelligent entrance guard electrically coupling the power unit with a transmit coil, and configured to receive electric energy supplied by the power unit, a first storage unit of the intelligent entrance guard storing a predefined identification code, a first controller of the intelligent entrance guard coupled to the first storage unit, a wireless receiver unit of the intelligent entrance guard coupled to the first controller, an unlocking unit of the intelligent entrance guard coupled to the first controller and a battery-free smart key. Therein, the current transmitter transmits the electric energy by wireless electromagnetic radiation via the transmit coil. The battery-free smart key includes a receive coil, a current receiver electrically coupled to the receive coil, and configured to receive the electric energy via the receive coil such that the battery-free smart key is powered; and a second controller coupled to an infrared transmit unit with the second storage unit and configured to control the infrared transmit unit to transmit an infrared signal containing an identification code. Therein, the wireless receiver unit receives the infrared signal, the first controller is configured to obtain the predefined identification code from the first storage unit and compare the identification code with the predefined identification code, and the unlocking unit is configured to unlock the intelligent entrance guard when the identification code matches with the predefined identification code, and not unlock the intelligent entrance guard when the identification code does not match with the predefined identification code.

According to one aspect of the disclosure, an intelligent entrance guard unlocking method includes: transmitting electric energy of a power unit of an intelligent entrance guard by wireless electromagnetic radiation via a transmit coil; receiving the electric energy via a receive coil of a battery-free smart key such that the battery-free smart key is powered; controlling an infrared transmit unit of the battery-free smart key to transmit an infrared signal containing an identification code to the intelligent entrance guard; obtaining a predefined identification code from a first storage unit of the intelligent entrance guard and comparing the identification code with the predefined identification code; unlocking the intelligent entrance guard when the identification code matches with the predefined identification code and not unlocking the intelligent entrance guard when the identification code does not match with the predefined identification code.

According to one aspect of the disclosure, an intelligent entrance guard unlocking method includes: receiving electric energy via a receive coil of a battery-free smart key such that the battery-free smart key is powered; and controlling an infrared transmit unit of the battery-free smart key to transmit an infrared signal containing an identification code of the battery-free smart key to the intelligent entrance guard. Therein, the intelligent entrance guard is capable of receiving the infrared signal and determining whether the battery-free smart key is matched with the intelligent entrance guard according to the identification code.

According to one aspect of the disclosure, a battery-free smart key includes a receive coil; a current receiver electrically coupled to the receive coil, and configured to receive electric energy via the receive coil such that the battery-free smart key is powered; a storage unit storing an identification code of the battery-free smart key; and a controller configured to control an infrared transmit unit to transmit an infrared signal containing the identification code to an intelligent entrance guard. Therein, the intelligent entrance guard is capable of receiving the infrared signal and determining whether the battery-free smart key is matched with the intelligent entrance guard according to the identification code.

### BRIEF DESCRIPTION OF THE DRAWINGS

Many aspects of the present disclosure are better understood with reference to the following drawings. The components in the drawings are not necessarily drawn to scale, the emphasis instead being placed upon clearly illustrating the principles of the present disclosure. Moreover, in the drawings, like reference numerals designate corresponding parts throughout the views.

FIG. 1 is a block diagram of an embodiment of an intelligent entrance guard unlocking system.

FIGS. 2 and 3 cooperatively constitute a signal flowchart of an embodiment of an intelligent entrance guard unlocking method.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. Also, the description is not to be considered as limiting the scope of the embodiments described herein. It should be noted that references to "an" or "one" embodiment in this disclosure are not necessarily to the same embodiment, and such references mean "at least one." The references "a plurality of" and "a number of" mean "at least two." The drawings are not necessarily to scale and the proportions of certain parts may be exaggerated to better illustrate details and features of the present disclosure.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "comprising," when utilized, means "including, but not necessarily limited to"; it specifically indicates open-ended inclusion or membership in the so-described combination, group, series and the like.

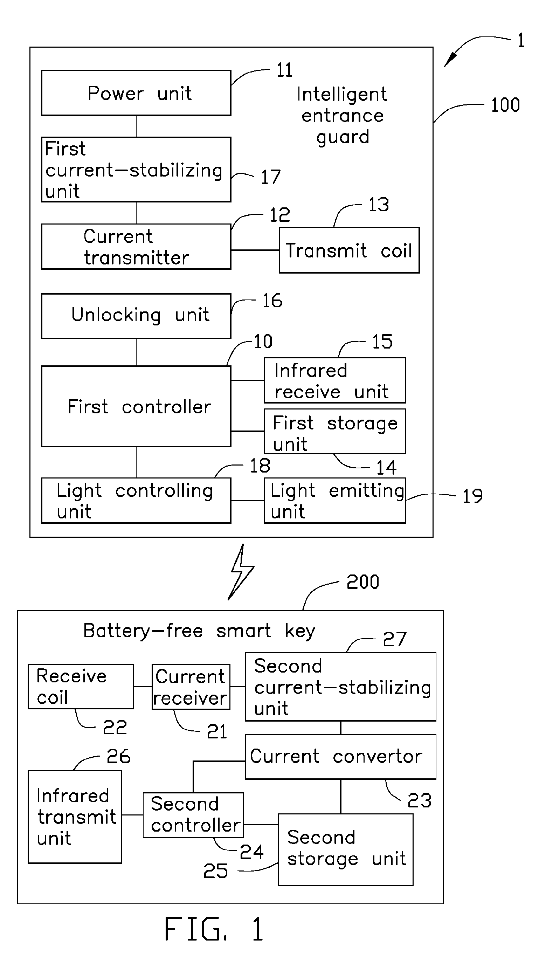

FIG. 1 shows an intelligent entrance guard unlocking system 1. The intelligent entrance guard unlocking system 1 can include but not limited to an intelligent entrance guard 100 and a battery-free smart key 200.

The intelligent entrance guard 100 can include a first controller 10, a power unit 11, a current transmitter 12, a transmit coil 13, a first storage unit 14 and an infrared receive unit 15 and an unlocking unit 16. In this embodiment, the power unit 11 can be a battery.

The first storage unit 14 can be used to store a predefined identification code. In at least one embodiment, the predefined identification code can be an identification code of a smart key matched with the intelligent entrance guard 10.

The current transmitter 12 of the intelligent entrance guard 100 can transmit electric energy of the power unit 11 by wireless electromagnetic radiation via the transmit coil 13.

The battery-free smart key 200 can include a current receiver 21, a receive coil 22, a current convertor 23, a second controller 24, a second storage unit 25 and an infrared transmit unit 26.

The second storage unit 25 can be used to store an identification code of the battery-free smart key 200.

The current receiver 21 can receive the electric energy if it is within a predefined distance of the transmit coil 13 via the receive coil 22 and power the battery-free smart key 200 via the received electric energy.

The battery-free smart key 200 is started to work when being powered. That is, the second controller 24 can obtain the identification code from the second storage unit 25. The second controller 24 can further control the infrared transmit unit 26 to transmit an infrared signal containing the identification code. The infrared receive unit 15 of the intelligent entrance guard 100 can receive the infrared signal. The intelligent entrance guard 100 can obtain the identification code from the infrared signal. The intelligent entrance guard 100 can compare the identification code obtained from the infrared signal to the predefined identification code stored in the storage unit 14. If the identification code matches with the predefined identification code, the unlocking unit 16 can control to unlock the intelligent entrance guard 100. The details are as follows.

The current transmitter 12 can electrically couple the power unit 11 with the transmit coil 13. In the embodiment, the current transmitter 12 can be a current transmission circuit, and used to optimize the electric energy received from the power unit 11. In detail, the current transmitter 12 can receive electric energy supplied by the power unit 11, and filter noises of the received electric energy, and further transmit the filtered electric energy in a way of wireless electromagnetic radiation via the transmit coil 13. In this embodiment, the electric energy can be alternating current.

The current receiver 21 can electrically couple with the receive coil 22. The current receiver 21 can be used to receive the electric energy from the transmit coil 13 via the receive coil 22. In the embodiment, the current receiver 21 can be a current receiving circuit, and the current receiver 21 can be used to filter noises of the electric energy received from the receive coil 22. The electric energy can be alternating current. The receive coil 22 can be coupled with the transmit coil 13. The transmit coil 13 can make the receive coil 22 generate induced current in a form of electro-magnetic induction, and the induced current can be alternating current.

The current convertor 23 can electrically couple the current receiver 21 with the second controller 24 and the second storage unit 26. The current convertor 23 can be used to convert the alternating current into direct current and power the battery-free smart key 200 via the current, as if the battery-free smart key 200 can be powered by a battery of itself.

The second controller 24 can electrically couple the second storage unit 25 with the infrared transmit unit 26. The second controller 24 can be used to obtain the identification code from the second storage unit 25 after the battery-free smart key 200 has been powered. The second controller 24 can further control the infrared transmit unit 26 to transmit the infrared signal containing the identification code.

The first controller 10 can electrically couple the infrared receive unit 15 with the first storage unit 14 respectively. The first controller 10 can be used to receive the infrared signal via the infrared receive unit 15. The first controller 10 can obtain the identification code from the infrared signal. The first controller 10 can compare the predefined identification code obtained from the first storage unit 14 with the identification code.

The unlocking unit 16 can electrically couple with the first controller 10. The unlocking unit 16 can control to unlock the intelligent entrance guard 100 when the identification code is matched with the predefined identification code. The unlocking unit 16 cannot control to unlock the intelligent entrance guard 100 when the identification code is not matched with the predefined identification code.

In at least one embodiment, the intelligent entrance guard 100 can further include a first current-stabilizing unit 17. The first current-stabilizing unit 17 can electrically couple the power unit 11 with the current transmitter 12. The first current-stabilizing unit 17 can be used to stabilize the current of the power unit 11 to prevent the current to exceed a predefined value suddenly, which may damage the electronic components of the intelligent entrance guard 100.

In at least one embodiment, the intelligent entrance guard 100 can further include a light controlling unit 18 and a light emitting unit 19. The light controlling unit 18 can electrically couple the first controller 10 with the light emitting unit 19. The light controlling unit 18 can be used to control the light emitting unit 19 to emit light with one color to prompt the user that the verification is successful when the identification code is matched with the predefined identification code. The light controlling unit 18 can further control the light emitting unit 19 to emit light with another color to prompt the user that the verification is unsuccessful when the identification code is not matched with the predefined identification code.

In at least one embodiment, the battery-free smart key 200 can further include a second current-stabilizing unit 27. The second current-stabilizing unit 27 can couple the current receiver 21 with the current convertor 23. The second current-stabilizing unit 27 can be used to stabilize the current of the received alternating current to prevent the current to exceed a predefined value suddenly, which may damage the electronic components of the battery-free smart key 200.

In at least one embodiment, if the received electric energy is direct current, the current convertor 23 can be thus omitted.

In at least one embodiment, the identification code matched with the predefined identification code can be that the identification code is equal to the predefined identification code and/or the identification code is uniquely corresponding to the predefined identification code.

In at least one embodiment, the intelligent entrance guard unlocking system 1 can be used but not limited to a vehicle door, a door, a box, a cabinet, an electronic device or other suitable device or object, for safety.

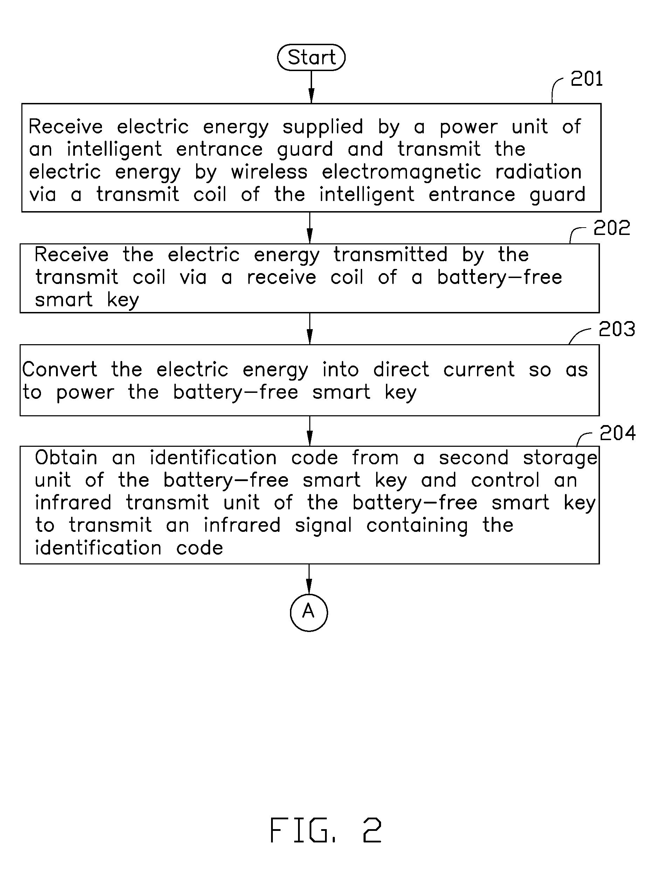

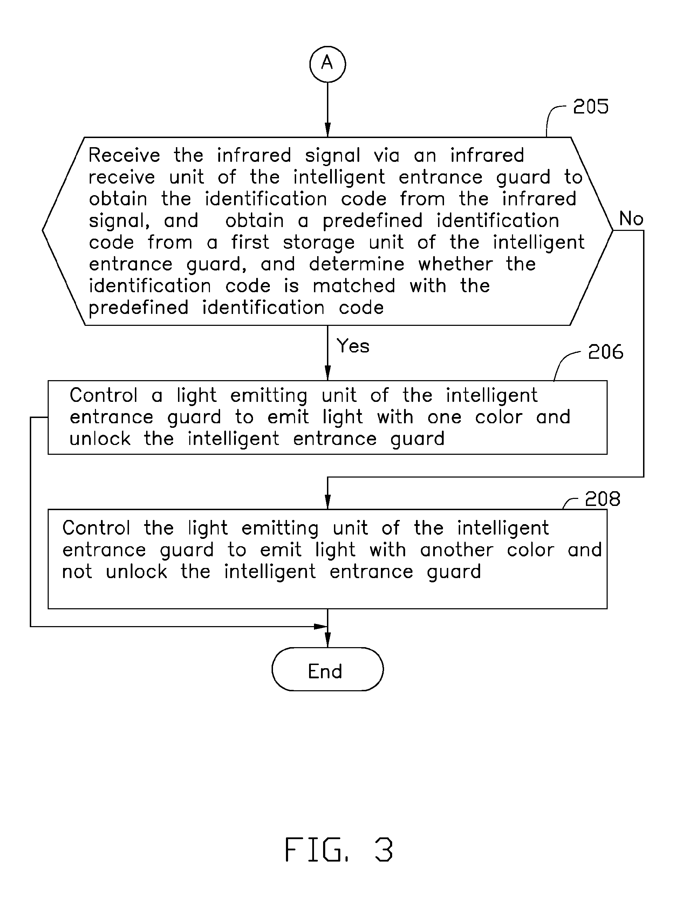

FIGS. 2 and 3 cooperatively constitute a signal flowchart of an intelligent entrance guard unlocking method. The intelligent entrance guard unlocking method is provided by way of example, as there are a variety of ways to carry out the method. The control method described below can be carried out using the configurations illustrated in FIG. 1, for example, and various elements of these figures are referenced in explaining the example method. Each block shown in FIGS. 2 and 3 represents one or more processes, methods, or subroutines carried out in the example method. Furthermore, the illustrated order of blocks is by example only and the order of the blocks can be changed. Additional blocks may be added or fewer blocks may be utilized, without departing from this disclosure. The example method can begin at block 201.

At block 201, a current transmitter receives electric energy supplied by a power unit of an intelligent entrance guard, and transmits the electric energy by wireless electromagnetic radiation via a transmit coil of the intelligent entrance guard, and the electric energy is alternating current.

At block 202, a current receiver receives the electric energy transmitted by the transmit coil via a receive coil of a battery-free smart key, and the electric energy is alternating current.

At block 203, a current convertor converts the alternating current into direct current and power the battery-free smart key via the received electric energy as if the battery-free smart key is powered by a battery of itself.

At block 204, a second controller obtains an identification code from a second storage unit of the battery-free smart key after the battery-free smart key has been powered, and further controls an infrared transmit unit of the battery-free smart key to transmit an infrared signal containing the identification code.

At block 205, a first controller receives the infrared signal via an infrared receive unit of the intelligent entrance guard, and obtains the identification code from the infrared signal, and compares a predefined identification code obtained from a first storage unit of the intelligent entrance guard with the identification code, and determines whether the identification code is matched with the predefined identification code, if yes, the process goes to block 206, otherwise, the process goes to block 207.

At block 206, a light controlling unit controls a light emitting unit of the intelligent entrance guard to emit light with one color to prompt the user that the verification is successful and an unlocking unit unlocks the intelligent entrance guard.

At block 207, the light controlling unit controls the light emitting unit of the intelligent entrance guard to emit light with another color to prompt the user that the verification is unsuccessful and the unlocking unit cannot unlock the intelligent entrance guard.

The embodiments shown and described above are only examples. Many details are often found in the art such as the other features of battery-free smart key and intelligent entrance guard unlocking system and unlocking method thereof using same. Therefore, many such details are neither shown nor described. Even though numerous characteristics and advantages of the present technology have been set forth in the foregoing description, together with details of the structure and function of the present disclosure, the disclosure is illustrative only, and changes may be made in the details, including in matters of shape, size, and arrangement of the parts within the principles of the present disclosure, up to and including the full extent established by the broad general meaning of the terms used in the claims. It will therefore be appreciated that the embodiments described above may be modified within the scope of the claims.

## Claims

1. An intelligent entrance guard unlocking system comprising:
a power unit of an intelligent entrance guard;
a current transmitter of the intelligent entrance guard electrically coupling the power unit with a transmit coil, and configured to receive electric energy supplied by the power unit, wherein the current transmitter transmits the electric energy by wireless electromagnetic radiation via the transmit coil;
a first storage unit of the intelligent entrance guard storing a predefined identification code;
a first controller of the intelligent entrance guard coupled to the first storage unit;
a wireless receiver unit of the intelligent entrance guard coupled to the first controller;
an unlocking unit of the intelligent entrance guard coupled to the first controller; and
a battery-free smart key comprising:
a receive coil;
a current receiver electrically coupled to the receive coil, and configured to receive the electric energy via the receive coil such that the battery-free smart key is powered; and
a second controller coupled to an infrared transmit unit with the second storage unit and configured to control the infrared transmit unit to transmit an infrared signal containing an identification code;
wherein the wireless receiver unit receives the infrared signal, the first controller is configured to obtain the predefined identification code from the first storage unit and compare the identification code with the predefined identification code, and the unlocking unit is configured to unlock the intelligent entrance guard when the identification code matches with the predefined identification code and not unlock the intelligent entrance guard when the identification code does not match with the predefined identification code.

2. The intelligent entrance guard unlocking system of claim 1, wherein the intelligent entrance guard unlocking system further comprises a light controlling unit of the intelligent entrance guard, the light controlling unit electrically couples the first controller with a light emitting unit, and the light controlling unit is configured to control the light emitting unit to emit light with one color when the identification code matches with the predefined identification code, and the light controlling unit is further configured to control the light emitting unit to emit light with another color when the identification code does not match with the predefined identification code.

3. The intelligent entrance guard unlocking system of claim 1, wherein the intelligent entrance guard unlocking system further comprises a first current-stabilizing unit of the intelligent entrance guard electrically coupled the power unit with the current transmitter, and the first current-stabilizing unit is configured to stabilize current of the power unit to prevent the current to exceed a predefined value suddenly.

4. The intelligent entrance guard unlocking system of claim 1, wherein the battery-free smart key further comprises a second current-stabilizing unit electrically coupled the current receiver with the second controller, and the second current-stabilizing unit is configured to stabilize current of the received electric energy to prevent the current to exceed a predefined value suddenly.

5. The intelligent entrance guard unlocking system of claim 1, wherein the battery-free smart key further comprises a current convertor electrically coupled the current receiver with the second controller, and the current convertor is configured to convert alternating current of electric energy into direct current so as to power the battery-free smart key.

6. An intelligent entrance guard unlocking method comprising:
transmitting electric energy of a power unit of an intelligent entrance guard by wireless electromagnetic radiation via a transmit coil;
receiving the electric energy via a receive coil of a battery-free smart key such that the battery-free smart key is powered;
controlling an infrared transmit unit of the battery-free smart key to transmit an infrared signal containing an identification code to the intelligent entrance guard;
obtaining a predefined identification code from a first storage unit of the intelligent entrance guard and comparing the identification code with the predefined identification code;
unlocking the intelligent entrance guard when the identification code matches with the predefined identification code; and
not unlocking the intelligent entrance guard when the identification code does not match with the predefined identification code.

7. The intelligent entrance guard unlocking method of claim 6, the intelligent entrance guard unlocking method further comprising:
controlling a light emitting unit of the intelligent entrance guard to emit light with one color when the identification code matches with the predefined identification code; and
controlling the light emitting unit to emit light with another color when the identification code does not match with the predefined identification code.

8. The intelligent entrance guard unlocking method of claim 6, the intelligent entrance guard unlocking method further comprising:
stabilizing current of the power unit to prevent the current to exceed a predefined value suddenly, and
stabilizing current of the received electric energy to prevent the current to exceed a predefined value suddenly.

9. The intelligent entrance guard unlocking method of claim 6, the intelligent entrance guard unlocking method further comprising:
converting alternating current of the electric energy into direct current so as to power the battery-free smart key.

10. An intelligent entrance guard unlocking method comprising:
receiving electric energy via a receive coil of a battery-free smart key such that the battery-free smart key is powered; and
controlling an infrared transmit unit of the battery-free smart key to transmit an infrared signal containing an identification code of the battery-free smart key to the intelligent entrance guard;
wherein, the intelligent entrance guard is capable of receiving the infrared signal and determining whether the battery-free smart key is matched with the intelligent entrance guard according to the identification code.

11. The intelligent entrance guard unlocking method of claim 10, the intelligent entrance guard unlocking method further comprising:
stabilizing current of the received electric energy to prevent the current to exceed a predefined value suddenly.

12. The intelligent entrance guard unlocking method of claim 10, the intelligent entrance guard unlocking method further comprising:
converting alternating current of the electric energy into direct current so as to power the battery-free smart key.

13. A battery-free smart key comprising:
a receive coil;
a current receiver electrically coupled to the receive coil, and configured to receive electric energy via the receive coil such that the battery-free smart key is powered;
a storage unit storing an identification code of the battery-free smart key; and
a controller configured to control an infrared transmit unit to transmit an infrared signal containing the identification code to an intelligent entrance guard;
wherein, the intelligent entrance guard is capable of receiving the infrared signal and determining whether the battery-free smart key is matched with the intelligent entrance guard according to the identification code.

14. The battery-free smart key of claim 13, wherein the battery-free smart key further comprises a current-stabilizing unit electrically coupling the current receiver with the current convertor, and the current-stabilizing unit is configured to stabilize current of the received electric energy to prevent the current to exceed a predefined value suddenly.

15. The battery-free smart key of claim 13, wherein the battery-free smart key further comprises a current convertor electrically coupling the current receiver with the controller, and the current convertor is configured to convert alternating current of electric energy into direct current so as to power the battery-free smart key.
